# EUROPEAN PATENT APPLICATION

(11) **EP 2 354 534 A1**
(43) Date of publication of application: **10.08.2011**
(21) Application number: 09828658.6
(22) Date of filing: 26.10.2009
(51) Int. Cl.: F03B 13/18

(54) **PLATFORM FOR CAPTURING WAVE ENERGY**

(30) Priority: 25.11.2008 ES 200803344
(71) Applicant: Mayoral Gonzalez, Felix, 28007 Madrid (ES)
(72) Inventor: Mayoral Gonzalez, Felix, 28007 Madrid (ES)
(74) Representative: Urizar Anasagasti, Jesus Maria
(86) International application number: PCT/ES2009/000512
(87) International publication number: WO 2010/061013

(57) **Abstract**

The present invention relates to a platform for capturing wave energy suitable for deep and ultra-deep waters, comprising a cover (1) supported on a submerged hull (2) by means of hydrodynamic pillars (3) uniformly distributed along its sides. Its plan view is V-shaped and it is self-orienting such that the wave front moves forward perpendicularly to its plane of symmetry. The wave energy is absorbed by means of separate capture modules (4) which, located between the pillars (3) along the sides, come into contact with the waves progressively as they move forward, which makes it possible to convert their periodic movement into a continuous movement. The platform is stabilized using large ballasts (8) connected, by means of mooring lines (9), to the lower edge of its pivot shaft (10), which allows it to automatically position itself correctly at all times.

## Description

The present invention is comprised in the technical field of renewable energy, more specifically relating to wave energy.

### Background of the Invention

Using the ocean as a non-contaminating energy source is not a recent idea. The energy from the swell has the highest potential as it is widely distributed all over the world, and it has a low environmental impact and high prediction capacity.

Japan, India, Norway, USA, Denmark, United Kingdom, Ireland and Portugal are the countries which are developing devices to extract energy from waves. There is a wide range of alternatives, some of which already have operating prototypes.

The designs, which must be considered experimental, can be classified into those which are fixed on the coast and those that float, which capture offshore wave energy. The following must be pointed out among the concepts used for converting energy from swell:
- Oscillating water column: this is a partially submerged stack having an opening at its base where the waves penetrate. Due to this water column inside it, it moves up and down. When the water level rises, the air is forced to pass through a turbine and upon its return, the suctioned air activates the turbine again. They are normally located on the coast, though there are floating versions.
- Filling systems: these systems collect the water of the striking waves to operate one or more turbines. They concentrate the waves by making them flow over into a basin from where the stored water goes to the turbines. They need large waves to cause the overflow. There are floating and coastal versions.
- Floating absorbers: these use the oscillating movement of the waves, which is transformed by mechanical or hydraulic means.

This group includes those formed by several articulated floating elements responsible for transforming the movement of the waves into electric energy. Hydraulic pumps are housed in the articulations. The back and forth movement to which they are subjected causes the articulations to bend and the hydraulic pumps to start operating, sending a fluid at a high pressure to the hydraulic generator.

Other methods are based on harnessing the energy from the vertical oscillation of the waves through buoys which move up and down on a structure in which a hydraulic pump is installed. The water enters and leaves the pump with the movement and drives an electric generator.
- Pendulum systems: these are devices suitable for being installed in a breakwater. They consist of a chamber oriented towards the ocean, provided with a rigid steel plate articulated in its upper part which can oscillate slightly under the action of the waves. Stationary rippling takes place inside the chamber which moves the plate, the oscillations of which are transmitted and absorbed by a hydraulic or pneumatic mechanism.

At high sea, the wave energy density is more than twice that on the coast, however most designs for harnessing wave energy are on the coast or close to it and they generate low output.

The present invention is aimed at providing a suitable solution to the problem described above.

### Description of the Invention

The invention relates to a platform for capturing wave energy, hereinafter platform, which is semi-submersible and suitable for operating in deep and ultra-deep waters, comprising at least one cover supported on a hull. The latter, which can be filled with water at will to achieve the suitable operating height, is submerged so the assembly is better stabilized even though it is working with a strong swell.

The platform, the plan view of which is V-shaped (or delta wing-shaped), is self-orienting such that the wave front moves forward perpendicularly to its plane of symmetry. The waves thus gradually and simultaneously strike a small area (compared to the size of the platform) on each side of the platform, moving with them until overflowing, which evidently simplifies its stabilization system.

The wave energy is absorbed by means of separate capture modules uniformly distributed along each of the sides of the platform. With this arrangement, the capture modules of each side come into contact with the wave progressively as it moves forward, which makes it possible to convert the periodic movement of the waves into a continuous movement.

The captured energy is converted into usable energy, generally electricity. Other options are: water desalination, hydrogen production etc.

The transmission of the energy from each capture module to electric generators or devices of another type is done mechanically using fluids as transmitting elements or a combination of both methods.

The electric generators can be connected to one and the same base in order to pool their generating capacity. It is also possible to interconnect other energy receiving devices according to the objective that is sought.

The platform is stabilized using an anchoring system comprising large ballasts connected, by means of mooring lines, to lower end of its pivot shaft, which allows it to automatically position itself correctly at all times.

### Brief Description of the Drawings

To better understand this specification several drawings are attached in which a practical embodiment of the invention is depicted as an example.

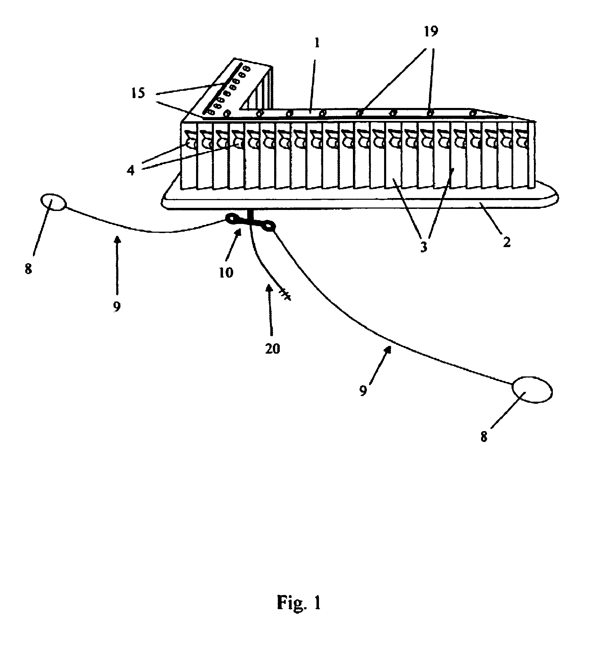

Figure 1 depicts a perspective view of a design comprising the basic elements of the platform.

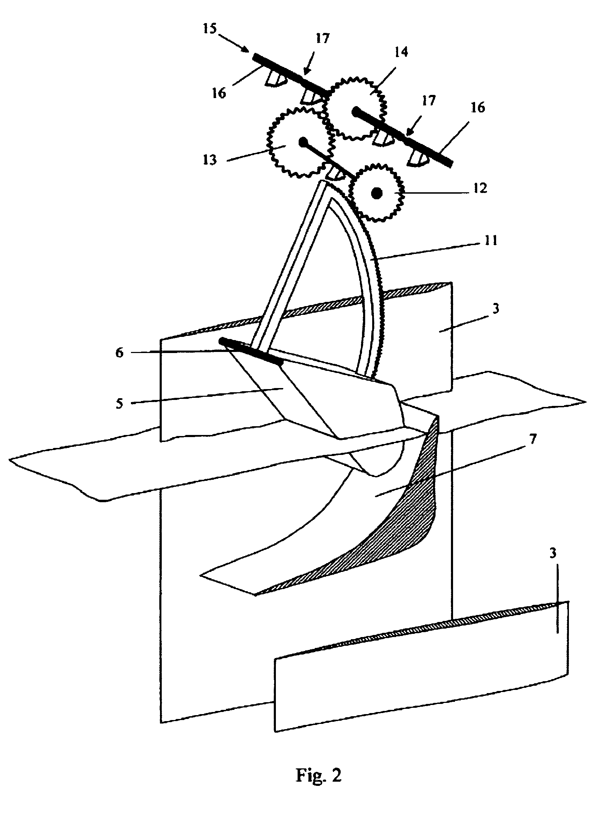

Figure 2 shows an example of a capture module, its location in the platform, the components comprising it and its mechanism for transferring energy to an articulated transmission shaft common to all the capture modules of one and the same side of the platform.

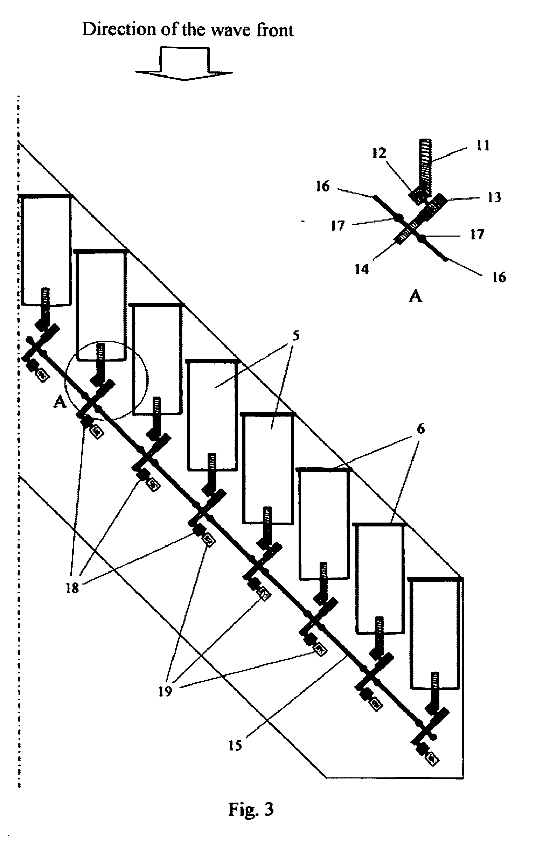

Figure 3 is a plan view of the elements comprised by the joint capture, transmission and generation system on the right side of the platform.

### Preferred Embodiment of the Invention

The platform in question comprises a cover (1) supported on the submerged hull (2) by means of pillars (3) uniformly distributed along each side and with a hydrodynamic profile oriented according to the forward movement direction of the waves.

The passageways formed by two contiguous pillars (3) communicate the outside with the inner area of the platform thus allowing the flow of water between both.

The platform is self-orienting such that the wave front moves towards it perpendicularly to its plane of symmetry. With this arrangement, when each wave reaches the platform, it is broken up by the pillars (3) it crashes into, portions of this wave penetrating the mentioned passageways being generated.

The wave energy is absorbed by means of separate capture modules (4) arranged between the pillars (3) on each of the sides of the platform. The energy absorbed by the capture modules (4) on the same side is yielded to the corresponding articulated transmission shaft (15). There is an articulated transmission shaft (15) on each side comprising receiving wheels (14), transmission rods (16) and Cardan joints (17) which connect the shafts of the receiving wheels (14) with the transmission rods (16).

The capture module (4) comprises a floater (5), articulated in its lower part to a shaft (6) allowing the movement in the direction of the swell.

The capture modules (4) are boxed into the inlet area of the waves in the passageways in chambers laterally demarcated by the two pillars (3) of each and in the lower part thereof by ramps (7) rigidly connected to said pillars (3). With this arrangement, the portion of the wave penetrating each passageway is forced to interact with the corresponding capture module (4), yielding both its kinetic and potential energy.

The greater the height of the ramp (7), which can be variable, the more energy susceptible of being captured for a given wave size. Nevertheless, said height will be such that the chamber in which the capture module (4) is located has been drained when the following portion of the wave starts entering said chamber. For this purpose, the ramp (7) must allow the larger waves of a certain size to partially overcome it, also causing the chamber to drain towards the inner area of the platform. All this indicates the need for establishing a range of heights of the ramp (7) according to the wave size.

The energy absorbed by each capture module (4) is yielded by means of a gear ring (11) to a free pinion (12), and the latter in turn by means of the transmission meshing of the pinion (13) to the receiving wheel (14) of the articulated transmission shaft (15) corresponding to its line of capture modules (4)

Several capture modules (4) on the same side provide energy to their articulated transmission shaft (15) at all times, which finally yields it to one or several generators (19). Since the rotation speed of the articulated transmission shaft (15) is necessarily low, the generators receive the energy through speed-up gears (18).

During the upward movement of the floater (5) when energy is being captured, the pinion (12) does not work, but is only activated during the downward movement phase. When the water is removed, the floater (5) moves downwards but with a certain delay because at this stage the pinion (12) is active and prevents free falling. Therefore, the floater (5) moves in suspension while at the same time the absorbed energy is yielded to the articulated transmission shaft (15). With this process, the upward and downward movement of the floater (5) is transformed into a rotation.

The performance of the joint mechanism on each side is maximal when the period of the waves "coincide" with that of the floaters (5) forming it. However, given that the period of the waves is variable, the solution is based on adapting the period of the floaters (5) to the period of the waves in each case. The submerged volume of the floaters (5) can be adjusted to given operating conditions. Once the submerged volume of the floaters (5) is fixed, their period can be regulated by varying the torque. This is achieved by activating or deactivating generators (19) on the side in question.

Due to their angled arrangement with respect to the wave front, the two lines of capture modules (4) are progressively activated as it moves forward, which provides a continuous rotation of the articulated transmission shafts (15). This allows converting low frequencies into higher frequencies which are necessary for producing electric energy.

Unwanted stresses are eliminated with the articulated transmission shaft (15), making it possible to work with variable angles without affecting the efficiency of the mechanism.

To assuring continuity of the movement, the length of the platform in the propagation direction of the waves must be greater than the wavelength of the longest waves in that location. The waves thus reach the platform before the preceding waves have flowed over it.

The platform is stabilized by means of an anchoring system comprising two large ballasts (8) connected by means of mooring lines (9) to the lower end of its pivot shaft (10).

The system is simplified with two ballasts (8). Furthermore, in this case it is not necessary for the platform to remain in place on the ocean's surface with a small radius of tolerance as occurs with oil platforms. However, its position is not as much of a determining factor and the radius of tolerance can be much greater. As a result, the movements of the platform are limited to an area the size of which depends on the rigidity of the ballasting system once installed. In any case, these movements within the established radius of tolerance do not negatively affect the operation of the platform as a whole. At rest, the mooring lines (9) and the pivot shaft (10) are theoretically on a vertical plane.

When the platform is oriented in the direction of the swell, the latter exerts a similar thrust on both its sides, whereby it will remain in that position indefinitely. In the event of a change in said direction of the swell, the difference of horizontal thrusts of the waves on the sides of the platform generates a momentum which forces it to rotate about the pivot shaft (10) to a new balance position in which it is correctly oriented. The rotation of the pivot shaft (10) about itself is prevented by the ballasting system. The power line (20) cannot rotate either because it is rigidly connected to the aforementioned pivot shaft (10).

A complementary dynamic positioning system provided with radar, sonar and computer-operated propellers which aid in correctly positioning the platform in cases of emergency is also considered.

It must be borne in mind that the length of a platform must be greater than the wavelength of the long waves in that location. A suitable geometry can be one in which the length is approximately half the breadth (width). Accordingly, for locations where there are waves with wavelengths of 150 meters, the actual size of a producing platform would be of the order of 160 meters in length by 320 meters in breadth.

The wave energy generated by a platform depends on the location and its size. The wave energy varies according to the area that is considered and for a given area, the greater the breadth of the platform the greater the energy produced. The breadth coincides with the length of the wave front that is used. The theoretical wave energy generated by a platform is the result of multiplying the breadth (in meters) by the mean energy of one meter of wave front. With waves having a mean energy of 60 kW/m (many European Atlantic coasts) and conditions similar to those described in the preceding paragraph (platform width of 320 meters), the theoretical wave energy that can be generated is in the order of 19.2 MW.

A group of units arranged in an area (farm) can share the control unit, the transport system and the conversion devices.

Based on the foregoing and by observing the drawings, it can be seen that the platform in question provides advantages with respect to other existing devices with similar purposes.

First, it offers the possibility of installing wave energy capture modules far from the coast in deep and ultra-deep waters, where the wave conditions are more favorable and therefore the production capacity/occupied surface ratio is considerably greater. Offshore locations also imply considerable environmental advantages.

Far from the coast, where there is ample space, the locations of platforms are not subject to the conditioning which most energy plants are subject to, and they can be located in more favorable sites for their operation.

In addition, since the platform is not permanently fixed to the bottom of the ocean, it is a mobile resource. If needed, they can be detached and towed to a new location.

The fact that the floating structure can be shared by two different capture systems is also a huge advantage because due to its large size, it is absolute feasible to install a wind generator on it which, in addition to other benefits, would aid in solving one of the issues of greater interest in the wind energy sector, which is the offshore installation of these mills due to the multiple advantages over wind generators installed on land, on the coast or close to it.

## Claims

1. A platform for capturing wave energy, **characterized in that** its plan view is V-shaped (or delta wing-shaped), which is self-orienting such that the wave front moves towards it perpendicularly to its plane of symmetry, and comprising at least one cover (1) supported on a submerged hull (2) by means of pillars (3) with a hydrodynamic profile oriented according to the forward movement direction of the waves, distributed along the sides of the platform forming passageways communicating the outer area with the inside thereof, to thus progressively break up the waves in their forward movement into portions penetrating the respective passageways; wave energy capture modules (4) such that each of them, comprising a floater (5) articulated in its upper part to a shaft (6) allowing the movement in the direction of the swell, is boxed into the inlet area of the waves in the passageway thereof, in a chamber laterally demarcated by its two pillars (3) and, in its lower part, by a structure in the form of a ramp (7) secured to said pillars (3), thus forcing the portion of the wave penetrating each passageway to interact with the corresponding capture module (4), which absorbs both its kinematic and potential energy to then yield it by means of a gear ring (11) to a free pinion (12) which transmits it by means of a rotational movement in a single direction; an anchoring system comprising ballasts (8) connected by means of mooring lines (9) to the lower end of the pivot shaft (10), which allows the platform to automatically position itself correctly at all times.

2. The platform for capturing wave energy according to the previous claim, **characterized in that** each free pinion (12) yields energy by means of the transmission meshing of the pinion (13) to the respective receiving wheel (14) of an articulated transmission shaft (15) common to all the capture modules (4) on the same side, comprising receiving wheels (14), transmission rods (16) and Cardan joints (17) which connect the shafts of the receiving wheels (14) with the transmission rods (16).

3. The platform for capturing wave energy according to claim 2, **characterized in that** the articulated transmission shaft (15) yields the energy provided by the capture modules (4) on its side through speed-up gears (18) to one or several generators (19).
